# EUROPEAN PATENT SPECIFICATION

(11) **EP 4 144 178 B1**
(45) Date of publication and mention of the grant of the patent: **14.02.2024**
(21) Application number: 20740598.6
(22) Date of filing: 14.07.2020
(51) Int. Cl.: H04W 76/28, H04W 76/40, H04W 92/18

(54) **MANAGEMENT OF SIDELINK DRX TIMERS**
VERWALTUNG VON SIDELINK-DRX-TIMERN
GESTION DE TEMPORISATEURS DRX DE LIAISON LATÉRALE

(43) Date of publication of application: 08.03.2023
(73) Proprietor: Huawei Technologies Co., Ltd., Shenzhen, Guangdong 518129 (CN)
(72) Inventor: CLAESON, Gustaf, 16440 Kista (SE); LINDOFF, Bengt, 16440 Kista (SE); ABBAS, Taimoor, 16440 Kista (SE); RYU, Kiseon, 16440 Kista (SE)
(74) Representative: Isarpatent
(86) International application number: PCT/EP2020/069811
(87) International publication number: WO 2022/012740

(56) References cited:
- EP-A1- 3 500 028
- WO-A1-2018/064477

## Description

### Technical Field

The disclosure generally relates to a sidelink DRX handling mechanism for reduced overhead. Especially, the invention relates to a client device and a corresponding method for such DRX handling mechanism.

### Background

Vehicle-to-Everything (V2X) communication is one safety feature that establishes communication among various entities on road for co-operative safety. V2X involves communication between Vehicle-to-Vehicle (V2V), Vehicle-to-Infrastructure (V2I), and Vehicle-to-Pedestrian (V2P). V2P is an umbrella term that encompasses the communication between vehicles and all types of Vulnerable Road Users (VRUs). By enabling V2P for VRUs, they can become active part of Intelligent Transport System (ITS) and can enable various safety and convenience ITS applications.

A typical safety message may contain speed, location, and direction of the respective vehicle or VRU. This information may then be used for the detection, tracking and trajectory prediction phases by the recipients of the safety message. Vehicles may broadcast 10 safety messages per second (i.e., at fixed 10 Hz frequency). VRUs may broadcast safety messages with varying frequency. The frequency may depend on parameters, such as, location and speed. In order to receive a safety message sent from vehicles and other VRUs, a User Equipment (UE) should monitor the slots of V2X for sidelink communication as long as the VRU application of the UE runs, at the cost of UE power consumption.

Due to the limited battery of the Pedestrian UE, schemes for UE power saving should be designed, which is not the case with the vehicular UE (V-UE). V-UE can continuously monitor the slots of the V2X resource pools. In order to reduce the power consumption of P-UE, a DRX mechanism, familiar from Uu operation, can be introduced for V2P communications. By doing so, the P-UE will be allowed to monitor the V2X slots only during the DRX-ON duration. For the P-UE, it may not always need to receive the messages from vehicles, e.g., a P-UE who is walking along a sidewalk not close to a junction or crossing. For a P-UE in a zone where the risk of collision is high the DRX functionality is not applicable.

WO 2018/064477 A1 relates to systems and methods for discontinuous reception in device-to-device communications. It describes the use of a broadcast data channel in an SL.

EP 3 500 028 A1 relates to an electronic device and method used for network control terminals and network nodes. It describes that a SLDRX timer pattern is flexible and based on a PSCCH reception (i.e. control channel).

### Summary

The object of the present invention is to provide a client device and method to provide a solution which mitigates or solves the drawbacks and problems of conventional solutions. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect of the present invention, the above mentioned and other objectives are achieved with a client device for a communication system, the client device comprising a processor configured to operate in a sidelink Discontinuous Reception, DRX, mode, and further being configured to
monitor a sidelink control channel when a sidelink DRX ON timer is running; and
start a sidelink DRX OFF timer upon reception of a sidelink broadcast data packet or, although not claimed, upon expiry of the sidelink DRX ON timer.

To monitor a sidelink control channel may be understood as that the client device monitors a physical sidelink control channel (PSCCH) containing sidelink control information (SCI) that indicates data transport block occurrence in a physical sidelink shared channel (PSSCH). The client device may decode a data transport block contained in the PSSCH upon decoding of a valid SCI of the corresponding PSCCH.

An advantage of the client device according to the first aspect is that the client device as a receiving client device can operate in sidelink DRX mode by adapting the related sidelink DRX timers according to reception of broadcast data from a transmitting client device. Thereby, no control signaling for sidelink DRX is needed which means reduced overhead. Further, the transmitting client device does not need to care about the sidelink DRX pattern of the receiving client device in sidelink broadcast transmission and hence improved spectrum utilization is possible. Also, power saving in the client device is possible with the present sidelink DRX handling mechanism.

In an implementation form of a client device according to the first aspect, the processor is further configured to
stop the sidelink DRX ON timer upon reception of the sidelink broadcast data packet.

An advantage of this implementation form is that the client device can stop monitoring a sidelink control channel and can hence reduce its power consumption upon reception of the sidelink broadcast data packet.

In an implementation form of a client device according to the first aspect, the processor is further configured to
refrain from monitoring the sidelink control channel when the sidelink DRX OFF timer is running.

An advantage of this implementation form is that the client device may not monitor the sidelink control channel and can therefore reduce its power consumption when the sidelink DRX OFF timer is running.

In an implementation form not claimed of a client device according to the first aspect, the value of the sidelink DRX ON timer and/or the value of the sidelink DRX OFF timer is
pre-defined, or
pre-configured in the client device.

This may be considered as static configuration of the client device.

An advantage of this implementation form is that no control signaling for sidelink DRX configuration may be required so that the control signaling overhead could be reduced in the system.

In an implementation form not claimed of a client device according to the first aspect, the processor is further configured to
obtain the value of the sidelink DRX ON timer and/or the value of the sidelink DRX OFF timer based on a SIB, a RRC message, or a MAC CE received from a network access node.

This may be considered as dynamic or semi-dynamic configuration of the client device.

An advantage of this implementation form is that the sidelink DRX configuration of the client device can be determined/controlled by the network access node when the network access node needs to coordinate the sidelink DRX configuration for one or more client devices.

According to the client device according to present invention in the first aspect, the processor is further configured to
obtain the value of the sidelink DRX ON timer and/or the value of the sidelink DRX OFF timer based on the received sidelink broadcast data packet.

An advantage of this implementation form is that the client device can adapt the sidelink DRX configuration dynamically according to the traffic pattern, e.g., transmission periodicity, of the received sidelink broadcast data packet.

In an implementation form of a client device according to the first aspect, the processor is further configured to
start the sidelink DRX ON timer upon expiry of the sidelink DRX OFF timer.

An advantage of this implementation form is that the client device can adapt its DRX ON durations to reception of broadcast data thereby saving power.

In an implementation form of a client device according to the first aspect, expiry of the sidelink DRX ON timer comprises
expiry of N number of consecutive repetitions of the sidelink DRX ON timer.

An advantage of this implementation form is that the client device can adaptively operate the sidelink DRX ON duration using the N number of consecutive repetition and the sidelink DRX ON timer.

In an implementation form of a client device according to the first aspect, expiry of the sidelink DRX ON timer comprises
expiry of a minimum of consecutive sidelink DRX ON occasions without any reception of a broadcast data packet + 1, or N number of consecutive repetitions of the sidelink DRX ON timer.

This can be expressed in a formula as min (consecutive sidelink DRX ON occasions without any reception of a broadcast data packet + 1, N).

An advantage of this implementation form is that the client device can adaptively operate the sidelink DRX ON duration according to parameter N and the status of the sidelink data reception.

In an implementation form of a client device according to the first aspect, wherein the value of N is pre-defined, or
pre-configured in the client device.

An advantage of this implementation form is that no control signaling for obtaining the value of parameter N is required thereby control signaling overhead can be reduced in the system.

In an implementation form of a client device according to the first aspect, wherein the processor is further configured to
obtain the value of N based on a SIB, a RRC message, or a MAC CE received from a network access node.

An advantage of this implementation form is that the parameter N can be determined/controlled by the network access node when the network access node needs to coordinate the sidelink DRX configuration for one or more client devices.

In an implementation form of a client device according to the first aspect, wherein
the sidelink control channel is a physical sidelink control channel.

An advantage of this implementation form is that the present sidelink DRX mechanism can be implemented with limited specification impact and low client device implementation complexity since it matches existing 3GPP sidelink protocol stacks, such as the NR protocol stack.

In an implementation form of a client device according to the first aspect, wherein the processor is further configured to
receive the sidelink broadcast data packet in a physical sidelink shared channel.

An advantage of this implementation form is the present sidelink DRX mechanism can be implemented with limited specification impact and low client device implementation complexity since it matches existing 3GPP sidelink protocol stacks, such as the NR protocol stack.

According to a second aspect according to the invention, the above mentioned and other objectives are achieved with a method for a client device configured to operate in a sidelink DRX mode, the method comprising
monitoring a sidelink control channel when a sidelink DRX ON timer is running; and
starting a sidelink DRX OFF timer upon reception of a sidelink broadcast data packet or upon expiry of the sidelink DRX ON timer.

The method according to the second aspect can be extended into implementation forms corresponding to the implementation forms of the client device according to the first aspect. Hence, an implementation form of the method comprises the feature(s) of the corresponding implementation form of the client device. The advantages of the methods according to the second aspect are the same as those for the corresponding implementation forms of the client device according to the first aspect.

The disclosure also relates to a computer program not claimed, characterized in program code, which when run by at least one processor causes said at least one processor to execute any method according to embodiments of the disclosure. Further, the disclosure also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the embodiments of the disclosure will be apparent from the following detailed description.

### Brief Description of the Drawings

The appended drawings are intended to clarify and explain different embodiments of the disclosure, in which:
- Fig. 1 shows a client device according to an embodiment of the disclosure;
- Fig. 2 shows a method for a client device according to an embodiment of the disclosure;
- Fig. 3 illustrates sidelink communication between two client devices according to embodiments of the disclosure; and
- Figs. 4 - 6 illustrate different sidelink DRX scenarios according to embodiments of the disclosure.

In the following description, features which in the above summary of the invention have been marked as "not claimed" or "according to the invention" are also hereinafter, when they are described and explained with reference to the drawings, to be understood as "not claimed" or "according to the invention".

### Detailed Description

3GPP has been developing standards for sidelink (SL) communication as a tool for UE to UE direct communication required in various use cases since LTE. The first standard for NR sidelink is completed in Rel. 16 where solutions including NR sidelink are being specified mainly for vehicle-to-everything (V2X) while they can also be used for public safety when the service requirement can be met.

To support sidelink DRX operation, it may be considered that the sidelink DRX configuration of a receiver UE (i.e. Rx UE) can be shared with a transmitter UE (i.e. Tx UE) according to the following two approaches: approach 1 - a receiver UE may transmit its SL DRX configuration to a transmitter UE using a unicast sidelink RRC/MAC control message; approach 2 - a network access node, e.g., a gNB or eNB, may provide a cell specific SL DRX configuration to the receiver UE. In approach 2, the network access node may broadcast the sidelink DRX configuration of the receiver UE including the sidelink DRX pattern and the timing offset of the sidelink DRX ON/OFF duration.

In approach 1 and 2, to synchronize sidelink DRX pattern and to obtain knowledge of which UEs are in sidelink DRX mode within a cell would require a lot of control signaling overhead and high power consumption in the UE. If transmitter UEs and receiver UEs need to continuously share the sidelink DRX configuration it will lead to load on the sidelink interface and Uu interface and potentially may also cause additional delay of data transmission in the sidelink channel due to control message exchanging before data transmission. In addition, sidelink resource utilization may be low since sidelink resources during the sidelink DRX OFF duration may not be used at all if at least one UE operates in sidelink DRX mode within the cell.

In order to solve the drawbacks mentioned above a sidelink DRX handling mechanism is herein presented. According to the disclosed sidelink DRX handling mechanism a receiver UE or a receiver client device may adapt its sidelink DRX operation according to the transmission of a transmitter UE or a transmitter client device.

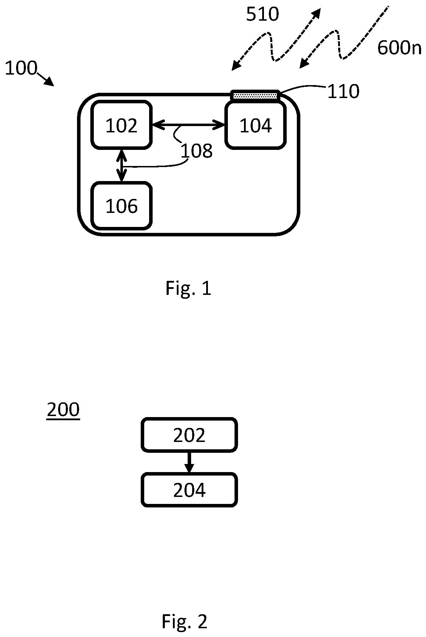

Fig. 1 shows a client device 100 according to an embodiment of the disclosure. In the embodiment shown in Fig. 1, the client device 100 comprises a processor 102, a transceiver 104 and a memory 106. The processor 102 may be coupled to the transceiver 104 and the memory 106 by communication means 108 known in the art. The client device 100 may further comprise an antenna or antenna array 110 coupled to the transceiver 104, which means that the client device 100 may be configured for wireless communications in a wireless communication system. That the client device 100 may be configured to perform certain actions can in this disclosure be understood to mean that the client device 100 comprises suitable means, such as e.g. the processor 102 and the transceiver 104, configured to perform said actions.

The client device 100 in this disclosure includes but is not limited to: a UE such as a smart phone, a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, an in-vehicle device, a wearable device, an integrated access and backhaul node (IAB) such as mobile car or equipment installed in a car, a drone, a device-to-device (D2D) device, a wireless camera, a mobile station, an access terminal, an user unit, a wireless communication device, a station of wireless local access network (WLAN), a wireless enabled tablet computer, a laptop-embedded equipment, an universal serial bus (USB) dongle, a wireless customer-premises equipment (CPE), and/or a chipset. In an Internet of things (IOT) scenario, the client device 100 may represent a machine or another device or chipset which performs communication with another wireless device and/or a network equipment.

The UE may further be referred to as a mobile telephone, a cellular telephone, a computer tablet or laptop with wireless capability. The UE in this context may e.g. be portable, pocket-storable, hand-held, computer-comprised, or vehicle-mounted mobile device, enabled to communicate voice and/or data, via the radio access network, with another entity, such as another receiver or a server. The UE can be a station (STA), which is any device that contains an IEEE 802.11-conformant media access control (MAC) and physical layer (PHY) interface to the wireless medium (WM). The UE may also be configured for communication in 3GPP related LTE and LTE-Advanced, in WiMAX and its evolution, and in fifth generation wireless technologies, such as NR.

The processor 102 of the client device 100 may be referred to as one or more general-purpose central processing units (CPUs), one or more digital signal processors (DSPs), one or more application-specific integrated circuits (ASICs), one or more field programmable gate arrays (FPGAs), one or more programmable logic devices, one or more discrete gates, one or more transistor logic devices, one or more discrete hardware components, and one or more chipsets.

The memory 106 of the client device 100 may be a read-only memory, a random access memory, or a non-volatile random access memory (NVRAM).

The transceiver 104 of the client device 100 may be a transceiver circuit, a power controller, an antenna, or an interface which communicates with other modules or devices.

In embodiments, the transceiver 104 of the client device 100 may be a separate chipset or being integrated with the processor 102 in one chipset. While in some embodiments, the processor 102, the transceiver 104, and the memory 106 of the client device 100 are integrated in one chipset.

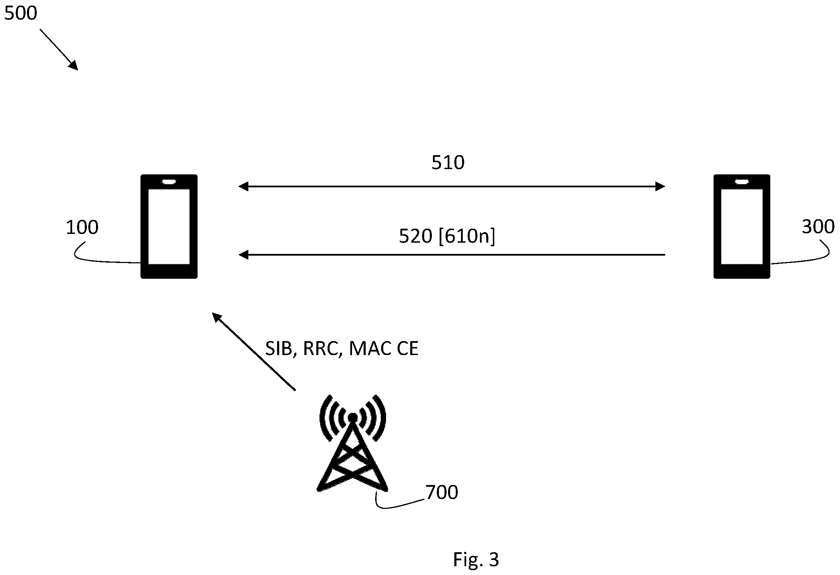

With reference to Fig. 1 and 3, according to embodiments of the disclosure the client device 100 comprises a processor configured to operate in a sidelink DRX mode. The processor is further configured to monitor a sidelink control channel 510 when a sidelink DRX ON timer is running. The processor is further configured to start a sidelink DRX OFF timer upon reception of a sidelink broadcast data packet 610n or upon expiry of the sidelink DRX ON timer.

Fig. 2 shows a flow chart of a corresponding method 200 which may be executed in a client device 100, such as the one shown in Fig. 1. The client device 100 is configured to operate in a sidelink DRX mode. With reference to Fig. 2 the method 200 comprises monitoring 202 a sidelink control channel 510 when a sidelink DRX ON timer is running. The method 200 further comprises starting 204 a sidelink DRX OFF timer upon reception of a sidelink broadcast data packet 610n or upon expiry of the sidelink DRX ON timer.

In embodiments of the disclosure, the sidelink control channel 510 mentioned is a physical sidelink control channel (PSCCH). This may imply that the processor is further configured to receive the sidelink broadcast data packet 610n in a physical sidelink shared channel (PSSCH) 520 according to embodiments of the disclosure.

Thereby, the client device 100 (such as Rx UE) can adapt its sidelink DRX parameters e.g., SL DRX ON timer, SL DRX OFF timer, etc. according to transmissions of a transmitter client device (such as Tx UE). For example, a Rx UE in sidelink DRX mode may monitor the sidelink channel to receive data from Tx UEs while SL DRX ON timer runs. When SL DRX ON timer expires or the Tx UE receives a sidelink broadcast data packet from Tx UE, the Rx UE stops SL DRX ON timer and/or starts SL DRX OFF timer to save its power while the SL DRX OFF timer runs.

In the following disclosure further non-limiting embodiments of the disclosure will be described and explained. However, for providing deeper understanding of such non-limiting embodiments the exemplary implementation examples are set in 3GPP sidelink context. This means that the terminology, expressions, system design, protocols, procedure, etc. herein used are taken from 3GPP sidelink context. Hence, e.g. a receiver client device is denoted receiver UE or Rx UE and a transmitter client device is denoted a transmitter UE or a Tx UE. Embodiments of the invention are however not limited to 3GPP sidelink scenarios but may be applied in any suitable communication system employing sidelink communication or corresponding communication.

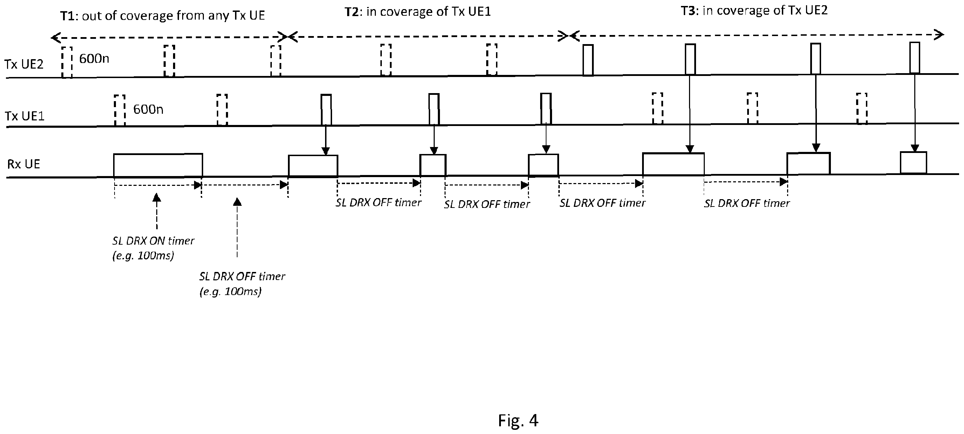

Figs. 4 - 6 illustrate SL communication involving a Rx UE and two Tx UEs, i.e. Tx UE1 and Tx UE2. The Rx UE can in these examples correspond to a client device comprising a processor configured to adapt its SL DRX parameters according to embodiments of the disclosure.

In Fig. 4 a Rx UE may operate with its sidelink DRX parameters, e.g., SL DRX ON timer, SL DRX OFF timer, etc., based on reception of broadcast data over PSSCH as described below. The Rx UE operating in SL DRX mode starts a SL DRX ON timer, e.g. with a timer value equal to 100ms as illustrated in Fig. 4. The Rx UE further monitors PSCCH while the SL DRX ON timer is running.

During time period T1 in Fig. 4, the Rx UE is out of coverage of any Tx UE that may broadcast data on PSSCH and when the SL DRX ON timer expires, the Rx UE starts the SL DRX OFF timer, e.g. with timer value equal to 100ms as illustrated in Fig. 4.

During time period T2, the Rx UE is in coverage of Tx UE1 and when the Rx UE receives a SL broadcast data packet from Tx UE1 on PSSCH, the Rx UE stops the SL DRX ON timer and starts the SL DRX OFF timer. Hence, in embodiments of the disclosure, the Rx UE stops the SL DRX ON timer upon reception of the sidelink broadcast data packet 610n.

It is noted that the time definition in 3GPP terms of start and stop of the SL DRX OFF timer and the SL DRX ON timer may be based on at least two cases. That is, the start and stop of the SL DRX ON and SL DRX OFF timers is based on the time instance upon reception of the PSCCH indicating the PSSCH containing the broadcast data packet, or based on the time instance upon reception of the PSSCH containing the broadcast data packet.

When the SL DRX OFF timer expires during time period T2, the Rx UE starts the SL DRX ON timer and monitors PSCCH as illustrated in Fig. 4.

During time period T3, the Rx UE is out of coverage of Tx UE1 and instead in coverage of Tx UE2 and the Rx UE adapts its SL DRX operation according to the broadcast transmissions of Tx UE2 as previously described. This means that the Rx UE stops the SL DRX ON timer and starts the SL DRX OFF timer when a broadcast data packet is received from Tx UE2 as illustrated in Fig. 4.

In embodiments of the disclosure, the Rx UE may not need to monitor PSCCH while the SL DRX OFF timer runs. In other words, the Rx UE refrains from monitoring the SL control channel when the SL DRX OFF timer is running.

There are mainly three different mechanism for configuring the Rx UE with SL DRX parameters.

According to one configuration mechanism, the value of the SL DRX ON timer and/or the value of the SL DRX OFF timer is pre-defined, or pre-configured in the Rx UE.

According to another configuration mechanism, the processor of the Rx UE is further configured to obtain the value of the SL DRX ON timer and/or the value of the SL DRX OFF timer based on a System Information Block (SIB), a Radio Resource Control (RRC) message, or a Medium Access Control (MAC) CE received from a network access node 700 as illustrated in Fig. 3.

According to yet another configuration mechanism, the processor of the Rx UE is further configured to obtain the value of the SL DRX ON timer and/or the value of the SL DRX OFF timer from the Tx UE based on the received SL broadcast data packet. This may imply that the value of the SL DRX ON timer and/or the value of the SL DRX OFF can be obtained based on either control information in PSCCH or from information included in or (as claimed) associated with the broadcast data packet in PSSCH.

In embodiments of the disclosure different SL DRX configuration mechanisms can be employed. In one example, the client device 100, or Rx UE, can use SL DRX configuration parameters in the following order of decreasing precedence:
1. Firstly, the SL DRX configuration parameters obtained in the received sidelink broadcast data packet are used for configuring the client device 100;
2. Secondly, the SL DRX configuration parameters provided by a network access node 700, using a SIB, a RRC message, or a MAC CE, are used for configuring the client device 100; and
3. Thirdly, the SL DRX configuration parameters which are pre-defined, or pre-configured, e.g. in the Universal Subscriber Identity Module (USIM) or in the Mobile

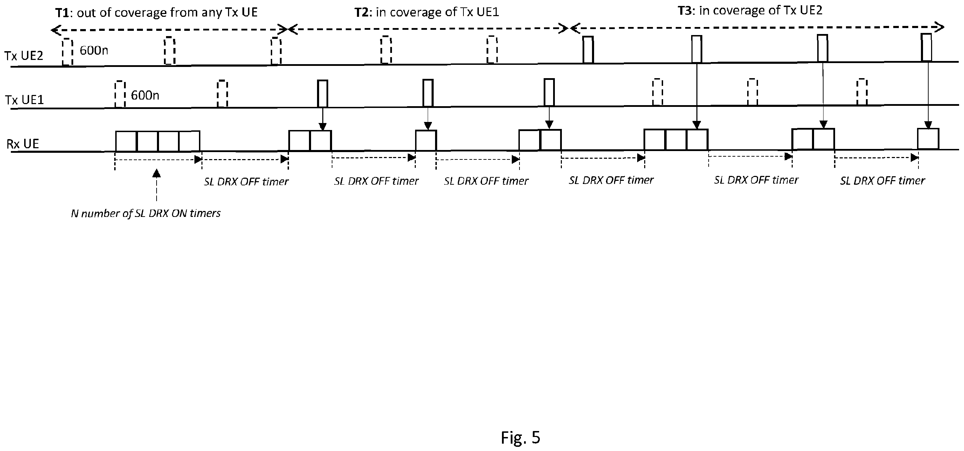

Equipment (ME) of the client device 100 used for configuring the client device 100. Moreover, a Rx UE in SL DRX mode may monitor PSCCH to receive broadcast data from Tx UE while the SL DRX ON timer is running. When the SL DRX ON timer expires without receiving broadcast data packet from Tx UE, the Rx UE may extend the SL DRX ON duration by re-starting the DRX ON timer according to a pre-defined repetition number. If the repetition of the SL DRX ON timer running expires or a broadcast data packet is received from the Tx UE during this time period, the Rx UE starts the SL DRX OFF timer to save power while the SL DRX OFF timer is running. This case is illustrated in Fig. 5.

As in Fig. 4 the Rx UE is out of coverage of any Tx UE during time period T1, in coverage of Tx UE1 during time period T2, and in coverage of Tx UE2 during time period T3 in Fig. 5. The embodiments in Fig. 5 differs from the embodiment in Fig. 4 in that the SL DRX ON timer is repeated N number of times unless broadcast data is received by the Rx UE.

During time period T1 in Fig. 5, the Rx UE starts the SL DRX ON timer and monitors PSCCH while the SL DRX ON timer is running.

When SL DRX ON timer expires without reception of broadcast data from a Tx UE over PSSCH, the Rx UE restarts the SL DRX ON timer in Fig. 5. The Rx UE may repeatedly run the SL DRX timer N number of times. In this example the length of the SL DRX ON timer is set to 25ms, and the value of N is set to 4. In this example 25ms*N is equal to 100ms so as to adapt to transmission of broadcast data.

If the Rx UE has done N repetitions of running the SL DRX ON timer, the Rx UE starts the SL DRX OFF timer which is the case during timer period T1 in Fig. 5. The value of the SL DRX OFF timer is in this example 100ms but may have another value.

However, if the Rx UE receives broadcast data when the SL DRX ON timer is running, the Rx UE starts the SL DRX OFF timer which is the case during time period T2 in Fig. 5.

As previously described when the SL DRX OFF timer expires, the Rx UE starts the SL DRX ON timer and monitors PSCCH.

During time period T3 in Fig. 5, the Tx UE is instead in coverage of Tx UE2 and the Tx UE acts in the same way as was the case during time period T2 but with the difference that broadcast data packets are received from Tx UE2.

The Rx UE may be configured with the value of N as a pre-configured value, i.e. pre-defined, or pre-configured in the client device 100 itself. However, the value of N may also be obtained based on a SIB, a RRC message, or a MAC CE received from a network access node 700 as illustrated in Fig. 3.

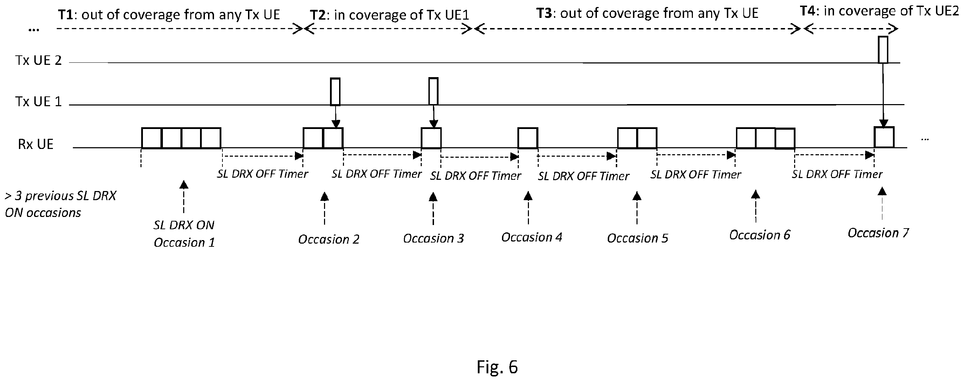

In further embodiments of the disclosure, the number of consecutive SL DRX ON durations and parameter N is considered which is illustrated in Fig. 6. That is, start the SL DRX OFF timer upon expiry of the sidelink DRX ON timer comprises expiry of a minimum of consecutive sidelink DRX ON occasions without any reception of a broadcast data packet + 1, or N number of consecutive repetitions of the sidelink DRX ON timer. This can also be formulated mathematically as:
min(number of consecutive SL DRX ON occasions without any received sidelink broadcast data + 1, N)

In Fig. 6, a SL DRX ON occasion is defined as a single SL DRX ON duration. A SL DRX ON duration starts when a SL DRX ON timer starts and ends when a SL DRX OFF timer starts.

During time period T1 in Fig. 6, the Rx UE starts the SL DRX ON timer and monitors PSCCH while the SL DRX ON timer is running.

During SL DRX ON occasion 1, when SL DRX ON timer expires without reception of broadcast data from any Tx UE over PSSCH, the Rx UE restarts the SL DRX ON timer. The Rx UE may repeat running the SL DRX ON timer as long as N is smaller than number of consecutive SL DRX ON occasions without any received SL broadcast data + 1. In this example, the value of N is set to 4 which means that the Rx UE has not received any SL broadcast data during at least 3 previous consecutive SL DRX ON occasions during SL DRX ON occasion 1.

If the Rx UE has done 4 repetitions of running the SL DRX ON timer, the Rx UE starts the SL DRX OFF timer which is the case during timer period T1 in Fig. 6. The value of the SL DRX OFF timer is in this example 100ms but may be set to another value.

However, if the Rx UE receives SL broadcast data when the SL DRX ON timer is running, the Rx UE starts the SL DRX OFF timer which is the case during time period T2 and during SL DRX ON occasion 2 in Fig. 6.

As previously described when the SL DRX OFF timer expires, the Rx UE starts the SL DRX ON timer and monitors PSCCH. The Rx UE starts the SL DRX OFF timer upon reception of sidelink broadcast data which is the case during SL DRX ON occasion 3 in Fig. 6.

During time period T3 in Fig. 6, the Tx UE is out of coverage from any Tx UE. When the SL DRX OFF timer expires, the Rx UE starts the SL DRX ON timer and monitors PSCCH during SL DRX ON occasion 4. When the SL DRX ON timer expires without any received SL broadcast data, the Rx UE starts the SL DRX OFF timer instead of restarting the SL DRX ON timer since during SL DRX ON occasion 3 min(number of consecutive SL DRX ON occasions without any received sidelink broadcast data + 1, N) is equal to 1.

During time period T3 and SL DRX ON occasion 5, the RX UE starts the SL DRX ON timer upon expiry of the SL DRX OFF timer. When the SL DRX ON timer expires without any received SL broadcast data, the Rx UE restarts the SL DRX ON timer instead of starting the SL DRX OFF timer since min(number of consecutive SL DRX ON occasions without any received sidelink broadcast data + 1, N) is equal to 2. When the SL DRX ON timer expires without any received SL broadcast data, the Rx UE starts the SL DRX OFF timer instead of restarting the SL DRX ON timer.

During time period T3 and SL DRX ON occasion 6, the RX UE starts the SL DRX ON timer upon expiry of the SL DRX OFF timer. When the SL DRX ON timer expires without any received SL broadcast data, the Rx UE restarts the SL DRX ON timer instead of starting the SL DRX OFF timer since min(number of consecutive SL DRX ON occasions without any received sidelink broadcast data + 1, N) is equal to 3. That is, the Rx UE may repeat running the SL DRX ON timer 3 times if SL broadcast data is not received. When the repetition of the SL DRX ON timer running expires without any received SL broadcast data, the Rx UE starts the SL DRX OFF timer instead of restarting the SL DRX ON timer.

During time period T4 and SL DRX ON occasion 7, the Rx UE is in coverage of Tx UE2 and the Tx UE acts in the same way as was the case during time period T2 but with the difference that SL broadcast data are received from Tx UE2.

The Rx UE may be configured with the value of N as a pre-configured value, i.e. pre-defined, or pre-configured in the client device 100 itself. However, the value of N may also be obtained based on a SIB, a RRC message, or a MAC CE received from a network access node 700 as illustrated in Fig. 3.

Embodiments of the disclosure may be implemented in communication standards such as 3GPP NR. Therefore, a non-limiting example is herein presented. The following text in italics could e.g. be added to a new SL specific chapter or as a subsection in 5.7 Discontinuous Reception (DRX) in 3GPP TS 38.321:
*SL RRC controls sidelink DRX operation by configuring the following parameters:*
   *sldrx-onTimer: the duration for that the MAC entity should monitor the PSCCH.*
   *sldrx-offTimer: the duration that the MAC entity needs not monitor the PSCCH* as *long* as *the timer is running.*
*When a SL DRX is configured, the Active Time includes the time while:*
   - *the sldrx-onTimer is running; or*
*When SL DRX is configured, the MAC entity shall:*
   *1>if the MAC entity is in Active Time:*
      *2> monitor the PSCCH* as *specified in TS 38.213;*
         *3> if the PSCCH indicates a broadcast transmission:*
         *4> receive the PSSCH indicated in the PSCCH:*
            *4> stop the sldrx-onTimer:*
         *4> start the sldrx-offTimer.*
      *2> if the sldrx-onTimer expires:*
         *3> start the sldrx-offTimer.*
   *1> if the sldrx-offTimer is running:*
      *2> needs not to monitor the PSCCH.*
   *1> if the sldrx-offTimer expires:*
      *2> start the sldrx-onTimer.*

Furthermore, any method according to embodiments of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the client device 100 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the client device 100 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the disclosure is not limited to the embodiments described above, but also relates to and incorporates all embodiments within the scope of the appended independent claims.

## Claims

1. A client device (100) for a communication system (500), the client device (100) comprising a processor configured to operate in a sidelink Discontinuous Reception, DRX, mode, and further being configured to
monitor a sidelink control channel (510) when a sidelink DRX ON timer is running; and
**characterized by** the processor further being configured to start a sidelink DRX OFF timer upon reception of a sidelink broadcast data packet (610n).
wherein the processor is further configured to
obtain the value of the sidelink DRX ON timer and/or the value of the sidelink DRX OFF timer based on the received sidelink broadcast data packet (610n).

2. The client device (100) according to claim 1, wherein the processor is further configured to
stop the sidelink DRX ON timer upon reception of the sidelink broadcast data packet (610n).

3. The client device (100) according to claim 1 or 2, wherein the processor is further configured to
refrain from monitoring the sidelink control channel (510) when the sidelink DRX OFF timer is running.

4. The client device (100) according to any one of the preceding claims, wherein the processor is further configured to
start the sidelink DRX ON timer upon expiry of the sidelink DRX OFF timer.

5. The client device (100) according to any one of claims 1 to 4, wherein expiry of the sidelink DRX ON timer comprises
expiry of N number of consecutive repetitions of the sidelink DRX ON timer.

6. The client device (100) according to any one of claims 1 to 4, wherein expiry of the sidelink DRX ON timer comprises
expiry of a minimum of consecutive sidelink DRX ON occasions without any reception of a broadcast data packet + 1, or N number of consecutive repetitions of the sidelink DRX ON timer.

7. The client device (100) according to claim 5 or 6, wherein the value of N is pre-defined, or
pre-configured in the client device (100).

8. The client device (100) according to any one of claims 5 to 7, wherein the processor is further configured to
obtain the value of N based on a SIB, a RRC message, or a MAC CE received from a network access node (700).

9. The client device (100) according to any one of the preceding claims, wherein
the sidelink control channel (510) is a physical sidelink control channel.

10. The client device (100) according to any one of the preceding claims, wherein the processor is further configured to
receive the sidelink broadcast data packet (610n) in a physical sidelink shared channel (520).

11. A method (200) for a client device (100) configured to operate in a sidelink DRX mode, the method (200) comprising
monitoring (202) a sidelink control channel (510) when a sidelink DRX ON timer is running; and
**characterized by** starting (204) a sidelink DRX OFF timer upon reception of a sidelink broadcast data packet (610n); and
wherein the value of the sidelink DRX ON timer and/or the value of the sidelink DRX OFF timer are obtained based on the received sidelink broadcast data packet (610n).

12. A device comprising:
a processor, and
a memory coupled to the processor and having processor-executable instructions stored thereon, which when executed by the processor, cause the processor to perform the method of claim 11.

## Patentansprüche

1. Client-Vorrichtung (100) für ein Kommunikationssystem (500), wobei die Client-Vorrichtung (100) einen Prozessor umfasst, der konfiguriert ist, um in einem Sidelink-Discontinuous-Reception-Modus, DRX-Modus, zu arbeiten, und ferner konfiguriert ist zum
Überwachen eines Sidelink-Steuerkanals (510), wenn ein Sidelink-DRX-ON-Zeitgeber läuft; und
**dadurch gekennzeichnet, dass** der Prozessor ferner konfiguriert ist zum Starten eines Sidelink-DRX-OFF-Zeitgebers bei Empfang eines Sidelink-Broadcast-Datenpakets (610n).
wobei der Prozessor ferner konfiguriert ist zum
Erhalten des Werts des Sidelink-DRX-ON-Zeitgebers und/oder des Werts des Sidelink-DRX-OFF-Zeitgebers basierend auf dem empfangenen Sidelink-Broadcast-Datenpaket (610n).

2. Client-Vorrichtung (100) nach Anspruch 1, wobei der Prozessor ferner konfiguriert ist zum
Stoppen des Sidelink-DRX-ON-Zeitgebers bei Empfang des Sidelink-Broadcast-Datenpakets (610n).

3. Client-Vorrichtung (100) nach Anspruch 1 oder 2, wobei der Prozessor ferner konfiguriert ist zum
Unterlassen des Überwachens des Sidelink-Steuerkanals (510), wenn der Sidelink-DRX-OFF-Zeitgeber läuft.

4. Client-Vorrichtung (100) nach einem der vorstehenden Ansprüche, wobei der Prozessor ferner konfiguriert ist zum
Starten des Sidelink-DRX-ON-Zeitgebers bei Ablauf des Sidelink-DRX-OFF-Zeitgebers.

5. Client-Vorrichtung (100) nach einem der Ansprüche 1 bis 4, wobei der Ablauf des Sidelink-DRX-ON-Zeitgebers umfasst
Ablauf einer Anzahl von N aufeinanderfolgenden Wiederholungen des Sidelink-DRX-ON-Zeitgebers.

6. Client-Vorrichtung (100) nach einem der Ansprüche 1 bis 4, wobei der Ablauf des Sidelink-DRX-ON-Zeitgebers umfasst
Ablauf eines Minimums von aufeinanderfolgenden Sidelink-DRX-ON-Ereignissen ohne jeglichen Empfang eines Broadcast-Datenpakets + 1 oder einer Anzahl von N aufeinanderfolgenden Wiederholungen des Sidelink-DRX-ON-Zeitgebers.

7. Client-Vorrichtung (100) nach Anspruch 5 oder 6, wobei der Wert von N vordefiniert, oder
in der Client-Vorrichtung (100) vorkonfiguriert ist.

8. Client-Vorrichtung (100) nach einem der Ansprüche 5 bis 7, wobei der Prozessor ferner konfiguriert ist zum
Erhalten des Werts von N basierend auf einem SIB, einer RRC-Nachricht oder einem MAC-CE, die von einem Netzwerkzugangsknoten (700) empfangen werden.

9. Client-Vorrichtung (100) nach einem der vorhergehenden Ansprüche, wobei der Sidelink-Steuerkanal (510) ein physischer Sidelink-Steuerkanal ist.

10. Client-Vorrichtung (100) nach einem der vorstehenden Ansprüche, wobei der Prozessor ferner konfiguriert ist zum
Empfangen des Sidelink-Broadcast-Datenpakets (610n) in einem gemeinsam genutzten physischen Sidelink-Kanal (520).

11. Verfahren (200) für eine Client-Vorrichtung (100), die konfiguriert ist, um in einem Sidelink-DRX-Modus zu arbeiten, wobei das Verfahren (200) umfasst Überwachen (202) eines Sidelink-Steuerkanals (510), wenn ein Sidelink-DRX-ON-Zeitgeber läuft; und
**gekennzeichnet durch**
Starten (204) eines Sidelink-DRX-OFF-Zeitgebers bei Empfang eines Sidelink-Broadcast-Datenpakets (610n); und
wobei der Wert des Sidelink-DRX-ON-Zeitgebers und/oder der Wert des Sidelink-DRX-OFF-Zeitgebers basierend auf dem empfangenen Sidelink-Broadcast-Datenpaket (610n) erhalten werden.

12. Vorrichtung, die umfasst:
einen Prozessor und
einen Speicher, der mit dem Prozessor gekoppelt ist und darauf gespeicherte prozessorausführbare Anweisungen aufweist, die, wenn sie durch den Prozessor ausgeführt werden, den Prozessor veranlassen, das Verfahren nach Anspruch 11 durchzuführen.

## Revendications

1. Dispositif client (100) pour un système de communication (500), le dispositif client (100) comprenant un processeur configuré pour fonctionner dans un mode de réception discontinue, DRX, de liaison latérale, et étant en outre configuré pour surveiller un canal de commande de liaison latérale (510) lorsqu'un temporisateur d'activation de DRX de liaison latérale est en cours d'exécution ; et
**caractérisé par** le processeur étant en outre configuré pour
démarrer un temporisateur de désactivation de DRX de liaison latérale lors de la réception d'un paquet de données de diffusion de liaison latérale (610n).
dans lequel le processeur est en outre configuré pour
obtenir la valeur du temporisateur d'activation de DRX de liaison latérale et/ou la valeur du temporisateur de désactivation de DRX de liaison latérale sur la base du paquet de données de diffusion de liaison latérale (610n) reçu.

2. Dispositif client (100) selon la revendication 1, dans lequel le processeur est en outre configuré pour
arrêter le temporisateur d'activation de DRX de liaison latérale lors de la réception du paquet de données de diffusion de liaison latérale (610n).

3. Dispositif client (100) selon la revendication 1 ou 2, dans lequel le processeur est en outre configuré pour
s'abstenir de surveiller le canal de commande de liaison latérale (510) lorsque le temporisateur de désactivation de DRX de liaison latérale est en cours d'exécution.

4. Dispositif client (100) selon l'une quelconque des revendications précédentes, dans lequel le processeur est en outre configuré pour
démarrer le temporisateur d'activation de DRX de liaison latérale lors de l'expiration du temporisateur de désactivation de DRX de liaison latérale.

5. Dispositif client (100) selon l'une quelconque des revendications 1 à 4, dans lequel l'expiration du temporisateur d'activation de DRX de liaison latérale comprend l'expiration du nombre N de répétitions consécutives du temporisateur d'activation de DRX de liaison latérale.

6. Dispositif client (100) selon l'une quelconque des revendications 1 à 4, dans lequel l'expiration du temporisateur d'activation de DRX de liaison latérale comprend l'expiration d'un minimum d'occasions d'activation de DRX de liaison latérale consécutives sans aucune réception d'un paquet de données de diffusion + 1, ou le nombre N de répétitions consécutives du temporisateur d'activation de DRX de liaison latérale.

7. Dispositif client (100) selon la revendication 5 ou 6, dans lequel la valeur de N est pré-définie, ou
préconfigurée dans le dispositif client (100).

8. Dispositif client (100) selon l'une quelconque des revendications 5 à 7, dans lequel le processeur est en outre configuré pour
obtenir la valeur de N sur la base d'un SIB, d'un message de RRC ou d'un CE MAC reçu depuis un noeud d'accès réseau (700).

9. Dispositif client (100) selon l'une quelconque des revendications précédentes, dans lequel
le canal de commande de liaison latérale (510) est un canal de commande de liaison latérale physique.

10. Dispositif client (100) selon l'une quelconque des revendications précédentes, dans lequel le processeur est en outre configuré pour
recevoir le paquet de données de diffusion de liaison latérale (610n) dans un canal partagé de liaison latérale physique (520).

11. Procédé (200) pour un dispositif client (100) configuré afin de fonctionner dans un mode DRX de liaison latérale, le procédé (200) comprenant
la surveillance (202) d'un canal de commande de liaison latérale (510) lorsqu'un temporisateur d'activation de DRX de liaison latérale est en cours d'exécution ; et
**caractérisé par**
le démarrage (204) d'un temporisateur de désactivation de DRX de liaison latérale lors de la réception d'un paquet de données de diffusion de liaison latérale (610n) ; et dans lequel la valeur du temporisateur d'activation de DRX de liaison latérale et/ou la valeur du temporisateur de désactivation de DRX de liaison latérale sont obtenues sur la base du paquet de données de diffusion de liaison latérale (610n) reçu.

12. Dispositif comprenant :
un processeur, et
une mémoire couplée au processeur et ayant des instructions exécutables par processeur stockées sur celui-ci, qui, lorsqu'elles sont exécutées par le processeur, amènent le processeur à effectuer le procédé selon la revendication 11.
